# EUROPEAN PATENT SPECIFICATION

(11) **EP 4 132 090 B1**
(45) Date of publication and mention of the grant of the patent: **06.11.2024**
(21) Application number: 20928303.5
(22) Date of filing: 03.04.2020
(51) Int. Cl.: H04W 36/00, H04W 36/12

(54) **NETWORK SLICE HANDOVER METHOD AND APPARATUS**
VERFAHREN UND VORRICHTUNG ZUR ÜBERGABE VON NETZWERK-SLICES
PROCÉDÉ ET APPAREIL DE TRANSFERT DE TRANCHE DE RÉSEAU

(43) Date of publication of application: 08.02.2023
(73) Proprietor: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); LI, Haitao, Dongguan, Guangdong 523860 (CN)
(74) Representative: Mewburn Ellis LLP
(86) International application number: PCT/CN2020/083253
(87) International publication number: WO 2021/196171

(56) References cited:
- EP-A1- 3 592 035
- WO-A1-2018/135992
- WO-A1-2018/143769
- CN-A- 108 924 884
- CN-A- 110 419 240
- CN-A- 110 838 927
- "3rd Generation Partnership Project; Technical Specification Group Radio Access Network; NR; NR and NG-RAN Overall Description; Stage 2 (Release 16)", vol. RAN WG2, no. V16.0.0, 8 January 2020 (2020-01-08), pages 1 - 101, XP051860596, Retrieved from the Internet <URL:ftp://ftp.3gpp.org/Specs/archive/38_series/38.300/38300-g00.zip 38300-g00.docx> [retrieved on 20200108]
- HUAWEI: "Xn based mobility for slicing across RA", vol. RAN WG3, no. Prague, Czech; 20171009 - 20171013, 9 October 2017 (2017-10-09), XP051344306, Retrieved from the Internet <URL:http://www.3gpp.org/ftp/Meetings_3GPP_SYNC/RAN3/Docs/> [retrieved on 20171009]

## Description

### TECHNICAL FIELD

This application relates to the field of communication technology, and particularly to a method and apparatus for network slice handover (HO).

### BACKGROUND

During slice handover (HO) in an existing slice technology, an existing HO procedure is that a source base station configures a user equipment (UE, that is, a terminal device) to perform measurement reporting, and transmits an HO request to a target base station based on a reporting result of the UE, where the HO request will carry packet data unit (PDU)-session-related information. The target base station performs access control. If a PDU session in the HO request corresponds to a slice that is not supported by the target base station, the target base station will reject the PDU session.

In the existing slice HO procedure, if the target base station does not support a slice that requires switch by the source base station, the target base station will reject a PDU session corresponding to the slice, which has a technical problem of service discontinuity during slice HO.

EP 3592035 provides a handover method in a mobile network and a communications apparatus. The method includes: sending, by a target access network node, a path switch request to a first core network node, where the first core network node is an access and mobility management function supported by both a source access network node and the target access network node, and the path switch request includes indication information of at least one semi-accepted flow/session/radio bearer; and receiving, by the target access network node, a path switch request reply sent by the first core network node, where the path switch request reply includes at least one of the following parameters: a flow/session/radio bearer whose path is successfully switched, a flow/session/radio bearer whose path fails to be switched, indication information of a new network slice, and a context of a modified flow/session/radio bearer.

3^{rd} generation partnership project; technical specification group radio access network discusses data forwarding in 9.2.3.2.3.

HUAWEI: "Xn based mobility for slicing across RA", 3GPP DRAFT, R3-173894 depicts: for the Handover Request message, it includes (all) PUD sessions with active UP connections handled by the source gNB, to indicate the target gNB which PDU session should handover to the target.

CN 110419240 relates to a network entity (110, 150) configured to control a handover of a user equipment (120) from a serving base station (110) to a candidate target base station (130) of a mobile communication network (100), wherein the serving base station (110) provides at least a first slice (110a-c) of a first slice type and the candidate target base station (130) provides at least a secondslice (130a-c) of a second slice type, wherein the user equipment (120) is registered to the first slice (110a-c) of the serving base station (110). The network entity (110, 150) comprises a processor (113, 153) configured to control, in response to a handover trigger, the handover of the user equipment (120) on the basis of a requested slice type and the second slice type provided by the candidate target base station (130). Moreover, the invention relates to a corresponding target base station (130) which comprises a processor (133) configured to process the handover request on the basis of the requested slice type and the second slice type. Additionally, the invention relates to the corresponding handover control methods performed by the network entity (110, 150) and the target base station (130), as well as to a corresponding computer program for performing either one of those methods.

WO 2018/143769 A1 relates to a pre-5th-Generation (5G) or 5G communication system to be provided for supporting higher data rates Beyond 4th-Generation (4G) communication system such as Long Term Evolution (LTE). Embodiments of the present disclosure provide a method of controlling data transmission and a device for performing the method. The method comprises: obtaining information on UE data and/or a UE context; and performing control for transmission of the UE data, according to the obtained information on the UE data and/or UE context.

### SUMMARY

The present invention provides a method for network slice handover executed by a target base station according to independent claim 1 and a corresponding target base station according to independent claim 13. Embodiments of the invention are defined in the dependent claims.

Technical solutions provided in implementations of the disclosure may have the following advantages.

The target base station receives the HO request transmitted by the source base station, and the target base station determines whether to perform slice remapping. As such, upon receiving the HO request transmitted by the source base station, the target base station can determine whether to perform slice remapping. By performing slice remapping at the target base station, it is possible to ensure HO service continuity during slice HO, thereby solving a technical problem of service discontinuity during slice HO.

It should be understood that, the general illustration above and the detailed illustration below are merely exemplary and shall not limit the disclosure.

### BRIEF DESCRIPTION OF THE DRAWINGS

The accompanying drawings herein, which are incorporated in and constitute a part of the specification, illustrate implementations consistent with the disclosure, and together with the specification, are intended to explain the principles of the disclosure.
FIG. 1 is a network architectural diagram of a communication system to which implementations of the disclosure are applicable.
FIG. 2 is a flowchart of a method for network slice handover (HO) according to implementation I of the disclosure which corresponds to the claimed embodiment.
FIG. 3 is a signaling interaction diagram of a method for network slice HO according to implementation I of the disclosure which corresponds to the claimed embodiment.
FIG. 4 is a block diagram of an apparatus for network slice HO provided in implementation II of the disclosure.
FIG. 5 is a block diagram of an apparatus for network slice HO provided in implementation III of the disclosure.
FIG. 6 is a hardware structural diagram of an apparatus for network slice HO provided in implementation IV of the disclosure.

### DETAILED DESCRIPTION

Exemplary implementations will be described in detail herein, and examples of these implementations are illustrated in the accompanying drawings. When the following elaborations relate to the accompanying drawings, unless otherwise stated, the same numerals in different accompanying drawings refer to the same or similar elements. The embodiments described in the following exemplary implementations are not intended to represent all embodiments consistent with the implementations of the disclosure. Instead, they are merely examples of methods and apparatuses consistent with some aspects of the disclosure as elaborated in the appended claims. Based on the implementations of the disclosure, all other implementations obtained by those skilled in the art without creative effort shall fall within the protection scope of the disclosure.

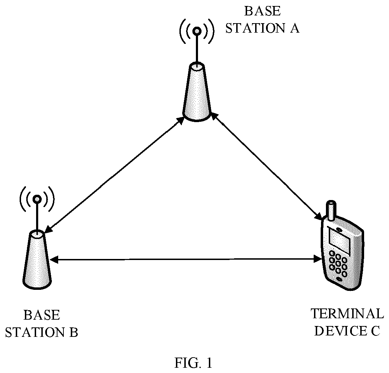

FIG. 1 illustrates a system architecture of a communication system to which the following implementations of the disclosure are applicable. The system architecture includes base station A, base station B, and terminal device C.

In order to meet requirements of vertical industries on delay, mobility, reliability, location accuracy, etc., a radio access network (RAN) needs to enhance access-network support for vertical services. One way is based on network slicing. RAN slicing can allow application providers to participate in design, deployment, and operations of a customized RAN, to better support services of the application providers. To this end, release 17 introduces access-network enhancements of slicing.

At present, a RAN-side defines one S-NSSAI (that is, single network slice selection assistance information) for each slice. A user equipment (UE)-side maintains one NSSAI, where the NSSAI is a list of S-NSSAIs. The UE-side can support up to 8 S-NSSAIs.

The S-NSSAI includes a slice/service type (SST) and a slice differentiator (SD), where the SST represents a service type, and the SD represents different UE groups served under the same SST.

In an existing slice handover (HO) procedure, if a target base station does not support a slice that requires switch by a source base station, the target base station will reject a packet data unit (PDU) session corresponding to the slice, which has a technical problem of service discontinuity during slice HO. The following implementations of the disclosure will describe in detail how to implement slice remapping to solve the technical problem of service discontinuity during slice HO.

In the system architecture, the exemplary communication system may be a global system of mobile communication (GSM), a code division multiple access (CDMA) system, a wideband code division multiple access (WCDMA) system, a general packet radio service (GPRS), a long term evolution (LTE) system, an LTE frequency division duplex (FDD) system, an LTE time division duplex (TDD) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a universal mobile telecommunication system (UMTS), a worldwide interoperability for microwave access (WiMAX) communication system, a wireless local area networks (WLAN), a wireless fidelity (WiFi), a next-generation communication system, or other communication systems, etc.

The exemplary communication system specifically includes a network device and a terminal. When the terminal accesses a mobile communication network provided by the network device, the terminal and the network device may be in a communication connection through a wireless link, and a mode of communication connection may be a single connectivity mode, a dual connectivity mode, or a multi-connectivity mode. However, when the mode of communication connection is the single connectivity mode, the network device may be an LTE base station or an NR base station (also called a gNB base station); and when the mode of communication connection is the dual connectivity mode (which may be implemented through a carrier aggregation (CA) technology or multiple network devices). The terminal in implementations of the disclosure may include various devices with wireless communication functions such as handheld devices, in-vehicle devices, wearable devices, computing devices or other processing devices connected to a wireless modem, and various forms of UEs, mobile stations (MS), terminal devices, etc. For the convenience of illustration, the devices mentioned above are collectively referred to as "terminal device".

In addition, the terms "system" and "network" herein are usually used interchangeably throughout this disclosure. The term "and/or" herein only describes an association relationship between associated objects, which means that there can be three relationships. For example, A and/or B can mean A alone, both A and B exist, and B alone. In addition, the character "j" herein generally indicates that the associated objects are in an "or" relationship.

It should be understood that, in implementations of the disclosure, "B corresponding to A" indicates that B is associated with A, and B may be determined according to A. However, it should be further understood that, "determine B according to A" does not mean that B is determined according to A only, and B may also be determined according to A and/or other information.

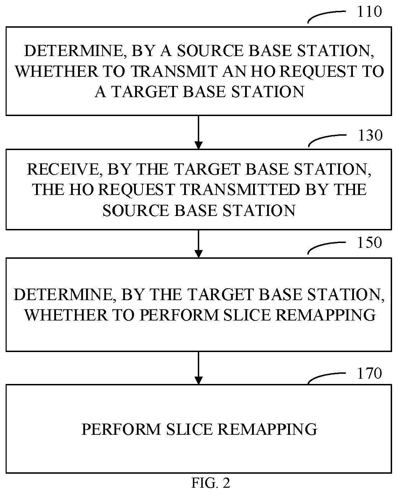

FIG. 2 is a flowchart of a method for network slice HO according to implementation I of the disclosure which corresponds to the claimed embodiment. As illustrated in FIG. 2, the method is applicable to a target base station and includes the following.

Step 130, the target base station receives an HO request transmitted by a source base station.

Step 150, the target base station determines whether to perform slice remapping.

The HO request indicates that the target base station performs slice HO. When the HO request transmitted by the source base station is received by the target base station, the target base station determines whether to perform slice remapping. The manner of determining whether to perform slice remapping may be that the target base station performs admission control. Optionally, slice remapping may also be slice fallback.

Optionally, step 150 may include the following.

Step 1511, according to first slice information, the target base station determines whether to perform slice remapping.

Optionally, step 1511 may include the following. If a first condition is satisfied, the target base station determines to perform slice remapping. The first condition is used for the target base station to determine whether to perform slice remapping, and the first condition is determined by the target base station according to the first slice information.

Optionally, step 1511 may include the following. Upon determining that the first condition is satisfied according to the first slice information, the target base station determines to perform slice remapping on condition that a slice supported by the target base station is different from a slice that requires switch by a terminal device requesting HO.

According to the first slice information, the target base station determines whether to perform slice remapping. The first slice information may be obtained from an orbital angular momentum (OAM), and/or obtained from an access and mobility management function (AMF), and/or obtained from a neighbouring base station. The target base station determines, according to the first slice information, whether the first condition is satisfied, and/or if the target base station determines that the first condition is satisfied, on condition that the slice supported by the target base station is different from the slice that requires switch by the terminal device requesting HO, the target base station determines to perform slice remapping.

Optionally, the first slice information includes at least one of: a slice support capability of the target base station, a slice supported by the source base station, a slice corresponding to a PDU session currently established by the terminal device at the source base station, a slice supported by the target base station, a service corresponding to a slice corresponding to an original PDU session, a group that a slice corresponding to an original PDU session belongs to (slices in the same group can be remapped to each other), an indication of whether a default slice corresponding to the target base station is supported, whether a PDU session and/or slice that requires switch has a requirement and/or indication for HO service continuity, or whether a PDU session and/or slice that requires switch but is not supported by the target is a highest priority service and/or slice.

Optionally, the first condition includes at least one of: the target base station has a slice support capability, where the slice support capability includes a remapping capability; the target base station does not support a slice corresponding to a PDU session requested by the source base station, but supports a default slice; a slice corresponding to a PDU session established at the source base station by the terminal device requesting HO and a slice supported by the target base station have the same SST field, but have different SDs; a slice corresponding to a PDU session established at the source base station by the terminal device requesting HO and a slice supported by the target base station are different, but correspond to a same service; a slice corresponding to a PDU session established at the source base station by the terminal device requesting HO and a slice supported by the target base station are different, but services corresponding to the two slices belong to a same service group; a slice corresponding to a PDU session established at the source base station by the terminal device requesting HO and a slice supported by the target base station are different, but belong to a same slice group; a PDU session and/or slice that requires switch has a requirement and/or indication for HO service continuity; or a PDU session and/or slice that requires switch but is not supported by the target is a highest priority service and/or slice.

Optionally, the method may further include the following.

Step 170, perform slice remapping.

Optionally, step 170 may include the following. A mapping between original PDU sessions and (user) data radio bearers (DRB) is modified into a mapping between new PDU sessions and DRBs.

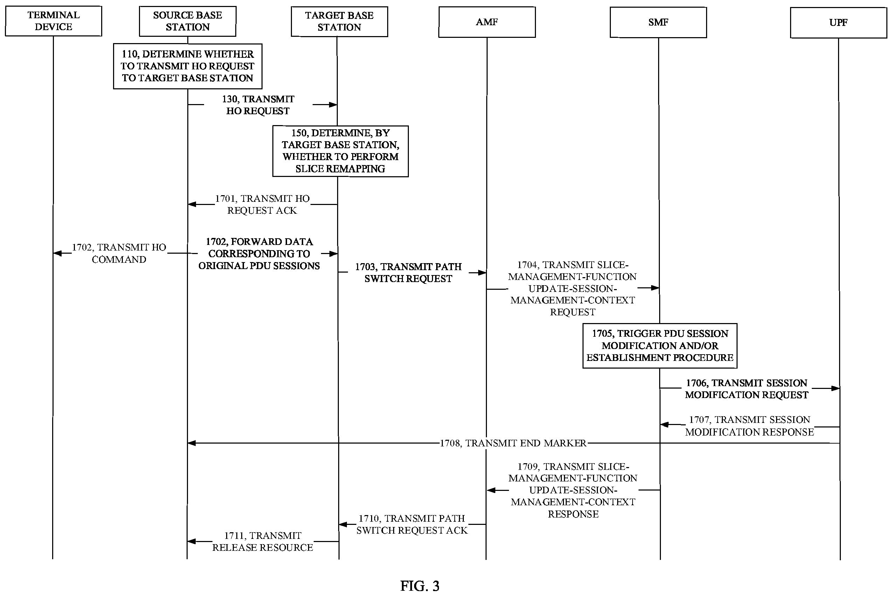

Refer to FIG. 3, which is a signaling interaction diagram of a method for network slice HO according to implementation I of the disclosure corresponding to the claimed embodiment. As illustrated in FIG. 3, modifying the mapping between original PDU sessions and DRBs into the mapping between new PDU sessions and DRBs may include at least one of the following.

Step 1701, the target base station transmits an HO request acknowledge (ACK) to the source base station. The ACK contains new-PDU-session information and/or notifies a data forwarding tunnel for a DRB corresponding to a PDU session to-be-remapped. The new-PDU-session information includes at least one of: a remapping indication, an original-PDU-session identity (ID), a slice corresponding to an original PDU session, a slice corresponding to a new PDU session, a new-PDU-session ID, the mapping between original PDU sessions and DRBs, or the mapping between new PDU sessions and DRB. Optionally, the PDU session to-be-remapped may be a data forwarding tunnel for a DRB corresponding to a new PDU session.

Step 1702, the source base station forwards data corresponding to the original PDU sessions to the target base station via the data forwarding tunnel, and transmits an HO command to the terminal device requesting HO.

Step 1703, the target base station transmits a path switch request to an AMF. The path switch request is N2 path switch request. The path switch request may contain a list of PDU sessions to-be-remapped with a remapping cause per PDU session, where the cause includes slice remapping, and the list includes the original-PDU-session ID and/or the new-PDU-session ID.

Step 1704, the AMF transmits a slice-management-function update-session-management-context request (referred to as "Nsmf_PDUSession_UpdateSMContext Request") to a session management function (SMF). The Nsmf_PDUSession_UpdateSMContext Request contains at least one of the list of PDU sessions to-be-remapped (referred to as "PDU session to-be-remapped with a remapping cause"), a PDU session remapping indication (referred to as "PDU session is to be remapped"), or a remapping cause.

Step 1705, the SMF triggers a PDU session modification and/or establishment procedure, to modify an existing PDU session and/or add a new PDU session. During triggering, the SMF may notify the terminal device (i.e. UE) to establish a new PDU session.

Step 1706, the SMF transmits to a user plane function (UPF) a session modification request (the session modification request is N4 session modification request), to trigger an end marker.

Step 1707, the UPF transmits a session modification response to the SMF. The session modification response is N4 session modification response.

Step 1708, the UPF transmits the end marker to the source base station.

Step 1709, the SMF transmits a slice-management-function update-session-management-context response (referred to as "Nsmf_PDUSession_UpdateSMContext Response") to the AMF, to indicate that the list of PDU sessions is remapped successfully. In addition, the Nsmf_PDUSession_UpdateSMContext Response may indicate a list of PDU sessions that are remapped successfully.

Step 1710, the AMF transmits a path switch request ACK to the target base station. The path switch request ACK is N2 path switch request ACK. The path switch request ACK contains a list of remapped PDU sessions (referred to as "remapped-PDU-session list").

Step 1711, the target base station transmits a release resource to the source base station after switch succeeds.

Continuing referring to FIG. 3, the method for slice HO may further include the following.

Step 110, the source base station determines whether to transmit the HO request to the target base station.

Whether to transmit the HO request to the target base station may be determined in two manners.

Manner 1: step 110 includes the following.

Step 1111, the source base station determines whether to transmit the HO request to the target base station according to second slice information.

Optionally, step 1111 includes the following. The source base station determines, according to the second slice information, whether a second condition is satisfied. The source base station determines whether to transmit the HO request to the target base station.

Optionally, step 1111 includes the following. If a second condition is satisfied, the source base station transmits the HO request to the target base station. The second condition is used for the source base station to determine whether to transmit the HO request to the target base station, and the second condition is determined by the source base station according to the second slice information.

Optionally, the second slice information includes at least one of: a slice support capability of the target base station, a slice supported by the source base station, a slice corresponding to a PDU session currently established by the terminal device at the source base station, a slice supported by the target base station, a service corresponding to a slice corresponding to an original PDU session, a group that a slice corresponding to an original PDU session belongs to, or an indication of whether a default slice corresponding to the target base station is supported.

Optionally, the second condition includes at least one of: the target base station has a slice support capability, where the slice support capability may include a remapping capability; existence of an indication that a default slice corresponding to the target base station is supported; a slice supported by the source base station is the same as a slice supported by the target base station, or is a subset of slices supported by the target base station; a slice corresponding to a PDU session currently established by the terminal device at the source base station is the same as a slice supported by the target base station, or is a subset of slices supported by the target base station, or belongs to a same service group as a service corresponding to the slice supported by the target base station; a service corresponding to a slice supported by the source base station is the same as a service corresponding to a slice supported by the target base station, or is a subset of services corresponding to slices supported by the target base station, or belongs to a same service group as the service corresponding to the slice supported by the target base station; a service corresponding to a slice corresponding to a PDU session currently established by the terminal device at the source base station is the same as a service corresponding to a slice supported by the target base station, or is a subset of services corresponding to slices supported by the target base station; a slice supported by the source base station and a slice supported by the target base station belong to a same group; or a slice corresponding to a PDU session currently established by the terminal device at the source base station and a slice supported by the target base station belong to a same group.

Optionally, the HO request contains remapping information, where the remapping information includes at least one of: a remapping indication, an original-PDU-session ID, a slice corresponding to an original PDU session, a slice corresponding to a new PDU session, a new-PDU-session ID, a mapping between original PDU sessions and DRBs, or a mapping between new PDU sessions and DRBs.

The source base station transmits the HO request to the target base station, if the source base station determines, according to the second slice information, that the second condition is satisfied. The HO request may contain the remapping information. The remapping information includes at least one of: the remapping indication, the original-PDU-session ID, the slice corresponding to an original PDU session, the slice corresponding to a new PDU session, the new-PDU-session ID, the mapping between original PDU sessions and DRBs, or the mapping between new PDU sessions and DRBs (the PDU session may also be replaced by a quality of service (QoS) flow).

Optionally, if a PDU session and/or slice that requires switch has no requirement and/or indication for HO service continuity, and/or a PDU session and/or slice that requires switch but is not supported by the target is not a service and/or slice having highest priority, the source base station can still trigger the HO request. The procedure thereof is the same as that of legacy HO.

In manner 1, a condition for determining slice remapping is provided, which ensures efficient implementation of slice remapping and avoids service discontinuity during slice service HO. In addition, a first-round screening by the source base station is introduced, which avoids delay and waste of interface signaling after transmission of the HO request due to non-support for a slice by the target base station.

Manner 2: step 110 includes the following.

Step 1121, the source base station determines an HO request result according to third slice information, where the third slice information is used for determining the HO request result.

Step 1123, whether to transmit the HO request to the target base station is determined according to the HO request result. In addition, the HO request may contain the HO request result.

Optionally, the third slice information includes at least one of: a slice support capability of the target base station, a slice supported by the source base station, a slice corresponding to a PDU session currently established by the terminal device at the source base station, a slice supported by the target base station, a service corresponding to a slice corresponding to an original PDU session, a group that a slice corresponding to an original PDU session belongs to, an indication of whether a default slice corresponding to the target base station is supported, whether a PDU session and/or slice that requires switch has a requirement and/or indication for HO service continuity, or whether a PDU session and/or slice that requires switch but is not supported by the target is a highest priority service and/or slice.

Optionally, the HO request result includes one of the following. The HO request will be transmitted, where the HO request carries a slice remapping indication. Optionally, the slice remapping indication may be an HO with slice remapping indication. Or, the HO request will be transmitted, where the HO request does not carry the slice remapping indication or carries a no-slice-remapping indication. Optionally, the no-slice-remapping indication is an HO indication and/or an HO without slice remapping indication. Or, the HO request will not be transmitted. Optionally, not transmitting HO request may be implemented as a no-HO indication (referred to as "no HO").

Optionally, determining, according to the HO request result, whether to transmit to the target base station the HO request containing the HO request result at step 1123 includes the following.

Step 11231, if a third condition is satisfied, the HO request result is transmitting the HO request with the slice remapping indication. The third condition is used for the source base station to determine whether to transmit to the target base station the HO request with the slice remapping indication.

Optionally, the third condition is determined according to the third slice information.

Optionally, if the third condition is satisfied, the HO request result is the HO with slice remapping indication. The source base station determines that slice remapping is needed. In this case, the source base station transmits the HO request to the target base station. The HO request may carry remapping information, where the remapping information includes at least one of: a remapping indication, an original-PDU-session ID, a slice corresponding to an original PDU session, a slice corresponding to a new PDU session, a new-PDU-session ID, a mapping between original PDU sessions and DRBs, or a mapping between new PDU sessions and DRBs (the PDU session may also be replaced by a QoS flow).

Step 11233, when the third condition is not satisfied and/or a fourth condition is satisfied, the HO request result is transmitting the HO request without the slice remapping indication or with the no-slice-remapping indication. The no-slice-remapping indication is used for the target base station to determine to perform HO without slice remapping, when an HO request indicating not to perform slice remapping is received by the target base station. The fourth condition is used for the source base station to determine whether to transmit to the target base station the HO request without the slice remapping indication or with the no-slice-remapping indication.

Optionally, the third condition and/or the fourth condition is determined according to the third slice information.

Step 11235, when the third condition is not satisfied and/or the fourth condition is not satisfied, the HO request result is not transmitting the HO request. Optionally, the HO request result is the no-HO indication (that is, the source base station does not transmit the HO request to the target base station) if the following condition is satisfied: the target base station does not support a slice, and/or a PDU session and/or slice that requires switch but is not supported by the target is not a highest priority service and/or slice, and/or a PDU session and/or slice that requires switch has no requirement and/or indication for HO service continuity.

Optionally, the third condition and/or the fourth condition is determined according to the third slice information.

Optionally, the third condition includes at least one of: the target base station has a slice support capability, where the slice support capability may include a remapping capability; existence of an indication that a default slice corresponding to the target base station is supported; a slice supported by the source base station is the same as a slice supported by the target base station, or is a subset of slices supported by the target base station; a slice corresponding to a PDU session currently established by the terminal device at the source base station is the same as a slice supported by the target base station, or is a subset of slices supported by the target base station; a service corresponding to a slice supported by the source base station is the same as a service corresponding to a slice supported by the target base station, or is a subset of services corresponding to slices supported by the target base station; a service corresponding to a slice corresponding to a PDU session currently established by the terminal device at the source base station is the same as a service corresponding to a slice supported by the target base station, or is a subset of services corresponding to slices supported by the target base station; a slice supported by the source base station and a slice supported by the target base station belongs to a same group; a PDU session and/or slice that requires switch has a requirement and/or indication for HO service continuity; or a PDU session and/or slice that requires switch but is not supported by the target is a highest priority service and/or slice.

Optionally, the fourth condition includes at least one of: the target base station does not support a slice, and may have a slicing capability; a slice corresponding to a PDU session currently established by the terminal device at the source base station is the same as a slice supported by the target base station; a PDU session and/or slice that requires switch but is not supported by the target is not a highest priority service and/or slice; or a PDU session and/or slice that requires switch has no requirement and/or indication for HO service continuity.

Optionally, "the PDU session and/or slice that requires switch but is not supported by the target is not the highest priority service and/or slice and/or the PDU session and/or slice that requires switch has no requirement and/or indication for HO service continuity" further includes the following. A slice corresponding to a PDU session currently established by the terminal device at the source base station is different from a slice supported by the target base station; and/or a service corresponding to a slice corresponding to a PDU session currently established by the terminal device at the source base station is different from a service corresponding to a slice supported by the target base station.

In manner 2, a condition for determining slice remapping as well as specific procedures and details of slice remapping is provided, which ensures efficient implementation of slice remapping and avoids service discontinuity during slice service HO. In addition, a first-round screening by the source base station is further refined. The HO request is transmitted only on condition that the source base station determines that the target can perform remapping or the target is required to perform remapping (for example, slice remapping may not be required if a slice that requires switch is not supported by the target, and service continuity does not need to be guaranteed), and the target base station is required explicitly to perform slice remapping, which ensures implementation of slice remapping and avoids delay and waste of interface signaling after transmission of the HO request due to the target base station not supporting a slice or no slice remapping being performed. Furthermore, the target base station performs corresponding operations only if the source base station determines that remapping is needed, which reduces complexity in implementation of a base station.

Optionally, the target base station may determine whether to perform slice remapping at step 150 in one of the following manners.

Manner 1: step 150 includes following.

Step 1511, according to the first slice information, the target base station determines whether to perform slice remapping.

Manner 2: step 150 includes following.

Step 1513, if a fifth condition is satisfied, the target base station determines to perform slice remapping.

Specifically, after the HO request is received, the target base station determines to perform slice remapping if the fifth condition is satisfied.

Manner 3: step 150 includes following.

Step 1513, if a fifth condition is satisfied, the target base station determines to perform slice remapping.

Optionally, if the fifth condition is satisfied, the target base station determines to perform slice remapping at step 1513 as follows.

Step 15131, upon determining, according to the HO request, that the fifth condition is satisfied, the target base station determines to perform slice remapping.

The target base station determines to perform slice remapping upon determining that the fifth condition is satisfied according to the HO request, where the HO request result is the HO with slice remapping indication.

If the HO request result is no indication, and/or the HO indication, and/or the HO without slice remapping indication, the target base station determines to perform HO without slice remapping.

Step 15133, regardless of the HO request result in the HO request, the target base station determines to perform slice remapping if the fifth condition is satisfied.

Optionally, the fifth condition includes at least one of: unconditionally; a slice supported by the target base station is different from a slice that requires switch by the terminal device requesting HO; the target base station has a slice support capability, where the slice support capability includes a remapping capability; the target base station does not support a slice corresponding to a PDU session requested by the source base station, but supports a default slice; a slice corresponding to a PDU session established at the source base station by the terminal device requesting HO and a slice supported by the target base station have the same SST field, but have different SDs; a slice corresponding to a PDU session established at the source base station by the terminal device requesting HO and a slice supported by the target base station are different, but correspond to a same service; a slice corresponding to a PDU session established at the source base station by the terminal device requesting HO and a slice supported by the target base station are different, but services corresponding to the two slices belong to a same service group; or a slice corresponding to a PDU session established at the source base station by the terminal device requesting HO and a slice supported by the target base station are different, but belong to a same slice group.

Optionally, the slice is identified by at least one of an S-NSSAI or a network slice identity (NSID).

Optionally, if a new PDU session is a PDU session that has not been established by the terminal device, since establishment of a new PDU session may fail, steps 1701 and 1702 need to be performed after step 1710. If a new PDU session is a PDU session that has already been established by the terminal device, steps 1701 and 1702 may remain unchanged in execution order, or may take place after step 1710.

If a new PDU session is a PDU session that has not been established by the terminal device, the new PDU session needs to be established, to correspond to a DRB corresponding to an existing original PDU session. If a new PDU session is a PDU session that has already been established by the terminal device, the original PDU session and the DRB will be deleted, and data of the original DRB may be forwarded to a path for the new PDU session and passed to the UPF via N3.

Optionally, all session lists may be slice lists, or a session list contains slice information.

Optionally, remapping may be replaced by fallback. This embodiment provides a condition for determining slice remapping that is selected by the target base station for performing slice remapping, which ensures efficient implementation of slice remapping and avoids service discontinuity during HO of slice services.

According to implementations, the target base station receives the HO request transmitted by the source base station, and the target base station determines whether to perform slice remapping. As such, upon receiving the HO request transmitted by the source base station, the target base station can determine whether to perform slice remapping. By performing slice remapping at the target base station, it is possible to ensure HO service continuity during slice HO, thereby solving a technical problem of service discontinuity during slice HO.

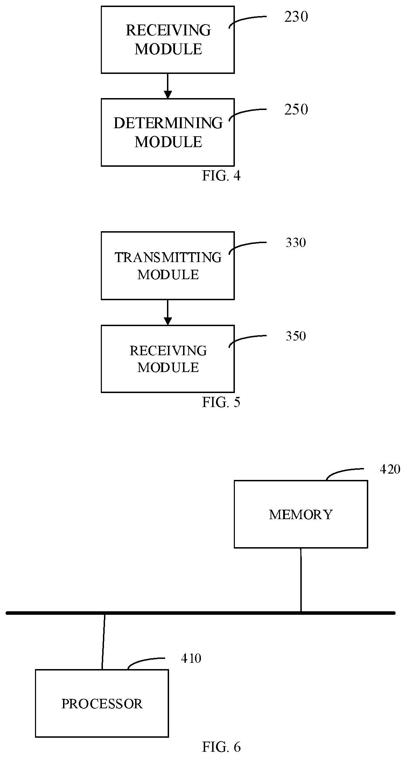

FIG. 4 is a block diagram of an apparatus for network slice HO provided in implementation II of the disclosure. As illustrated in FIG. 4, the apparatus is a target base station, and may include but is not limited to a receiving module 230 and a determining module 250. The receiving module 230 is configured for the target base station to receive an HO request transmitted by a source base station. The determining module 250 is configured for the target base station to determine whether to perform slice remapping.

Optionally, the determining module 250 is further configured for the target base station to determine whether to perform slice remapping according to first slice information.

Optionally, the determining module 250 is further configured for the target base station to determine to perform slice remapping when a first condition is satisfied. The first condition is used for the target base station to determine whether to perform slice remapping, and the first condition is determined by the target base station according to the first slice information.

Optionally, the determining module 250 is further configured for the target base station to determine to perform slice remapping on condition that a slice supported by the target base station is different from a slice that requires switch by a terminal device requesting HO, upon determining that the first condition is satisfied according to the first slice information.

Optionally, the first slice information includes at least one of: a slice support capability of the target base station, a slice supported by the source base station, a slice corresponding to a PDU session currently established by the terminal device at the source base station, a slice supported by the target base station, a service corresponding to a slice corresponding to an original PDU session, a group that a slice corresponding to an original PDU session belongs to, an indication of whether a default slice corresponding to the target base station is supported, whether a PDU session and/or slice that requires switch has a requirement and/or indication for HO service continuity, or whether a PDU session and/or slice that requires switch but is not supported by the target is a highest priority service and/or slice.

Optionally, the first condition includes at least one of: the target base station has a slice support capability, where the slice support capability includes a remapping capability; the target base station does not support a slice corresponding to a PDU session requested by the source base station, but supports a default slice; a slice corresponding to a PDU session established at the source base station by the terminal device requesting HO and a slice supported by the target base station have the same SST field, but have different SDs; a slice corresponding to a PDU session established at the source base station by the terminal device requesting HO and a slice supported by the target base station are different, but correspond to a same service; a slice corresponding to a PDU session established at the source base station by the terminal device requesting HO and a slice supported by the target base station are different, but services corresponding to the two slices belong to a same service group; a slice corresponding to a PDU session established at the source base station by the terminal device requesting HO and a slice supported by the target base station are different, but belong to a same slice group; a PDU session and/or slice that requires switch has a requirement and/or indication for HO service continuity; or a PDU session and/or slice that requires switch but is not supported by the target is a highest priority service and/or slice.

Optionally, the apparatus further includes a remapping module 270. The remapping module 270 is configured to perform slice remapping.

Optionally, the remapping module 270 is further configured to modify a mapping between original PDU sessions and DRBs into a mapping between new PDU sessions and DRBs.

Optionally, the remapping module 270 is further configured for the target base station to transmit an HO request ACK to the source base station. The ACK contains new-PDU-session information and/or notifies a data forwarding tunnel for a DRB corresponding to a PDU session to-be-remapped, and the new-PDU-session information includes at least one of: a remapping indication, an original-PDU-session ID, a slice corresponding to an original PDU session, a slice corresponding to a new PDU session, a new-PDU-session ID, the mapping between original PDU sessions and DRBs, or the mapping between new PDU sessions and DRBs. The remapping module 270 is further configured for the source base station to forward data corresponding to the original PDU sessions to the target base station via the data forwarding tunnel, and transmit an HO command to the terminal device requesting HO. The remapping module 270 is further configured for the target base station to transmit a path switch request to an AMF. The remapping module 270 is further configured for the AMF to transmit a slice-management-function update-session-management-context request to an SMF. The slice-management-function update-session-management-context request contains at least one of a list of PDU sessions to-be-remapped, a PDU session remapping indication, or a remapping cause. The remapping module 270 is further configured for the SMF to trigger a PDU session modification and/or establishment procedure, to modify an existing PDU session and/or add a new PDU session. The remapping module 270 is further configured for the SMF to transmit a session modification request to a UPF. The remapping module 270 is further configured for the UPF to transmit a session modification response to the SMF. The remapping module 270 is further configured for the UPF to transmit an end marker to the source base station. The remapping module 270 is further configured for the SMF to transmit a slice-management-function update-session-management-context response to the AMF, to indicate that the list of PDU sessions is remapped successfully. The remapping module 270 is further configured for the target base station to receive a path switch request ACK transmitted by the AMF, where the path switch request ACK contains a list of remapped PDU sessions. The remapping module 270 is further configured for the target base station to transmit a release resource to the source base station after switch succeeds.

Optionally, the apparatus may further include, but is not limited to, a transmission-determining module 210. The transmission-determining module 210 is configured for the source base station to determine whether to transmit the HO request to the target base station.

Optionally, the transmission-determining module 210 is further configured for the source base station to determine whether to transmit the HO request to the target base station according to second slice information.

Optionally, the transmission-determining module 210 is further configured for the source base station to transmit the HO request to the target base station when a second condition is satisfied. The second condition is used for the source base station to determine whether to transmit the HO request to the target base station, and the second condition is determined by the source base station according to the second slice information.

Optionally, the second slice information includes at least one of: a slice support capability of the target base station, a slice supported by the source base station, a slice corresponding to a PDU session currently established by the terminal device at the source base station, a slice supported by the target base station, a service corresponding to a slice corresponding to an original PDU session, a group that a slice corresponding to an original PDU session belongs to, or an indication of whether a default slice corresponding to the target base station is supported.

Optionally, the second condition includes at least one of: the target base station has a slice support capability; existence of an indication that a default slice corresponding to the target base station is supported; a slice supported by the source base station is the same as a slice supported by the target base station, or is a subset of slices supported by the target base station; a slice corresponding to a PDU session currently established by the terminal device at the source base station is the same as a slice supported by the target base station, or is a subset of slices supported by the target base station, or belongs to a same service group as a service corresponding to the slice supported by the target base station; a service corresponding to a slice supported by the source base station is the same as a service corresponding to a slice supported by the target base station, or is a subset of services corresponding to slices supported by the target base station, or belongs to a same service group as the service corresponding to the slice supported by the target base station; a service corresponding to a slice corresponding to a PDU session currently established by the terminal device at the source base station is the same as a service corresponding to a slice supported by the target base station, or is a subset of services corresponding to slices supported by the target base station; a slice supported by the source base station and a slice supported by the target base station belong to a same group; or a slice corresponding to a PDU session currently established by the terminal device at the source base station and a slice supported by the target base station belong to a same group.

Optionally, the HO request contains remapping information, where the remapping information includes at least one of: a remapping indication, an original-PDU-session ID, a slice corresponding to an original PDU session, a slice corresponding to a new PDU session, a new-PDU-session ID, a mapping between original PDU sessions and DRBs, or a mapping between new PDU sessions and DRBs.

Optionally, the transmission-determining module 210 is further configured for the source base station to determine an HO request result according to third slice information, where the third slice information is used for determining the HO request result. The transmission-determining module 210 is further configured to determine, according to the HO request result, whether to transmit the HO request to the target base station, where the HO request contains the HO request result.

Optionally, the third slice information includes at least one of: a slice support capability of the target base station, a slice supported by the source base station, a slice corresponding to a PDU session currently established by the terminal device at the source base station, a slice supported by the target base station, a service corresponding to a slice corresponding to an original PDU session, a group that a slice corresponding to an original PDU session belongs to, an indication of whether a default slice corresponding to the target base station is supported, whether a PDU session and/or slice that requires switch has a requirement and/or indication for HO service continuity, or whether a PDU session and/or slice that requires switch but is not supported by the target is a highest priority service and/or slice.

Optionally, the HO request result includes one of: transmitting the HO request with a slice remapping indication, transmitting the HO request without the slice remapping indication or with a no-slice-remapping indication, or not transmitting the HO request.

Optionally, the transmission-determining module 210 is further configured to, when a third condition is satisfied, the HO request result is transmitting the HO request with the slice remapping indication. The third condition is used for the source base station to determine whether to transmit to the target base station the HO request with the slice remapping indication. The transmission-determining module 210 is further configured to, when the third condition is not satisfied and/or a fourth condition is satisfied, the HO request result is transmitting the HO request without the slice remapping indication or with the no-slice-remapping indication. The no-slice-remapping indication is used for the target base station to determine to perform HO without slice remapping when an HO request without slice remapping is received by the target base station. The fourth condition is used for the source base station to determine whether to transmit to the target base station the HO request without the slice remapping indication or with the no-slice-remapping indication. The transmission-determining module 210 is further configured to, when the third condition is not satisfied and/or the fourth condition is not satisfied, the HO request result is not transmitting the HO request.

Optionally, the third condition includes at least one of: the target base station has a slice support capability; existence of an indication that a default slice corresponding to the target base station is supported; a slice supported by the source base station is the same as a slice supported by the target base station, or is a subset of slices supported by the target base station; a slice corresponding to a PDU session currently established by the terminal device at the source base station is the same as a slice supported by the target base station, or is a subset of slices supported by the target base station; a service corresponding to a slice supported by the source base station is the same as a service corresponding to a slice supported by the target base station, or is a subset of services corresponding to slices supported by the target base station; a service corresponding to a slice corresponding to a PDU session currently established by the terminal device at the source base station is the same as a service corresponding to a slice supported by the target base station, or is a subset of services corresponding to slices supported by the target base station; a slice supported by the source base station and a slice supported by the target base station belongs to a same group; a PDU session and/or slice that requires switch has a requirement and/or indication for HO service continuity; or a PDU session and/or slice that requires switch but is not supported by the target is a highest priority service and/or slice.

Optionally, the fourth condition includes at least one of: the target base station does not support a slice; a slice corresponding to a PDU session currently established by the terminal device at the source base station is the same as a slice supported by the target base station; a PDU session and/or slice that requires switch but is not supported by the target is not a highest priority service and/or slice; or a PDU session and/or slice that requires switch has no requirement and/or indication for HO service continuity.

Optionally, the PDU session and/or slice that requires switch but is not supported by the target is not the highest priority service and/or slice and/or the PDU session and/or slice that requires switch has no requirement and/or indication for HO service continuity further includes the following. A slice corresponding to a PDU session currently established by the terminal device at the source base station is different from a slice supported by the target base station, and/or a service corresponding to a slice corresponding to a PDU session currently established by the terminal device at the source base station is different from a service corresponding to a slice supported by the target base station.

Optionally, the determining module 250 is further configured for the target base station to determine to perform slice remapping when a fifth condition is satisfied, where the fifth condition is used for the target base station to determine whether to perform slice remapping.

Optionally, the fifth condition includes at least one of: unconditionally; a slice supported by the target base station is different from a slice that requires switch by the terminal device requesting HO; the target base station has a slice support capability, where the slice support capability includes a remapping capability; the target base station does not support a slice corresponding to a PDU session requested by the source base station, but supports a default slice; a slice corresponding to a PDU session established at the source base station by the terminal device requesting HO and a slice supported by the target base station have the same SST field, but have different SDs; a slice corresponding to a PDU session established at the source base station by the terminal device requesting HO and a slice supported by the target base station are different, but correspond to a same service; a slice corresponding to a PDU session established at the source base station by the terminal device requesting HO and a slice supported by the target base station are different, but services corresponding to the two slices belong to a same service group; or a slice corresponding to a PDU session established at the source base station by the terminal device requesting HO and a slice supported by the target base station are different, but belong to a same slice group.

Optionally, the slice is identified by at least one of an S-NSSAI or an NSID.

For the implementation process of the function and role of each module and other parts that are not described or defined in detail in this embodiment, reference can be made to the elaboration in implementation I, which will not be repeated herein.

FIG. 5 is a block diagram of an apparatus for network slice HO provided in implementation III of the disclosure. As illustrated in FIG. 5, the apparatus is a source base station. The apparatus may include but is not limited to a transmitting module 330 and a receiving module 350. The transmitting module 330 is configured for the source base station to transmit an HO request to a target base station. The HO request is used for the target base station to determine whether to perform slice remapping when the HO request is received by the target base station. The receiving module 350 is configured for the source base station to receive an HO request ACK fedback by the target base station. The HO request ACK contains new-PDU-session information and/or notifies a data forwarding tunnel for a DRB corresponding to a PDU session to-be-remapped.

Optionally, the apparatus may further include but is not limited to a determining module 310. The determining module 310 is configured for the source base station to determine whether to transmit the HO request to the target base station.

Optionally, the determining module 310 is further configured for the source base station to determine whether to transmit the HO request to the target base station according to second slice information.

Optionally, the determining module 310 is further configured for the source base station to transmit the HO request to the target base station if a second condition is satisfied. The second condition is used for the source base station to determine whether to transmit the HO request to the target base station, and the second condition is determined by the source base station according to the second slice information.

Optionally, the determining module 310 is further configured for the source base station to determine an HO request result according to third slice information, where the third slice information is used for determining the HO request result. The determining module 310 is further configured to determine, according to the HO request result, whether to transmit the HO request to the target base station, where the HO request contains the HO request result.

Optionally, the transmitting module 330 is further configured to forward data corresponding to an original PDU session to the target base station via the data forwarding tunnel, and transmit an HO command to a terminal device requesting HO. Optionally, the receiving module 350 is further configured to receive an end marker transmitted by a UPF, and receive a release resource transmitted by the target base station.

For the implementation process of the function and role of each module and other parts that are not described or defined in detail in this embodiment, reference can be made to the elaboration in implementation I, which will not be repeated herein.

FIG. 6 is a hardware structural diagram of an apparatus for network slice HO provided in implementation IV of the disclosure. As illustrated in FIG. 6, the apparatus includes a processor 410 and a memory 420. The various assemblies above of the apparatus are in a communication connection with each other via a bus system.

The memory 420 is configured to store programs executable by the processor 410. The processor 410, when executing the programs, implements some or all operations of the foregoing method for network slice HO in implementation I of the disclosure.

The processor 410 may be a separate component, or may be a collective term for multiple processing components. For example, the processor 410 may be a central processing unit (CPU), or may be an application specific integrated circuit (ASIC), or may be one or more integrated circuits configured to implement the foregoing method such as at least one microprocessor (e.g. digital signal processor (DSP)) or at least one field programmable gate array (FPGA), etc.

The steps of the method or algorithm described in implementations of the disclosure may be implemented by means of hardware, or may be implemented by executing software instructions by a processor. The software instructions can be implemented by corresponding software modules, which can be stored in a random access memory (RAM), a flash memory, a read only memory (ROM), an erasable programmable ROM (EPROM), an electrically EPROM (EEPROM), registers, hard disk, mobile hard disk, compact disc (CD)-ROM, or any other form of storage medium known in the art. An exemplary storage medium is coupled to the processor, such that the processor can read information from the storage medium and write information to the storage medium. The storage medium can also be a component of the processor. The processor and the storage medium may be located in an ASIC. In addition, the ASIC can be located in an access-network device, a target network device, or a core-network device. The processor and the storage medium may also be present as discrete components in the access-network device, the target network device, or the core-network device.

Those skilled in the art will appreciate that, all or part of functions described in implementations of the disclosure can be implemented through software, hardware, firmware, or any other combination thereof. When implemented by software, all or part of the functions can be implemented in the form of a computer program product. The computer program product includes one or more computer instructions. When the computer instructions are applied and executed on a computer, all or part of the operations or functions of the implementations of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disc, a hard disc, or a magnetic tape), an optical medium (such as a digital video disc (DVD)), or a semiconductor medium (such as a solid state disk (SSD)), etc.

## Claims

1. A method for network slice handover, HO, executed by a target base station and comprising:
receiving (130), by the target base station, an HO request transmitted by a source base station; and
determining (150), by the target base station, to perform slice remapping when a first condition is satisfied, wherein the first condition is used for the target base station to determine whether to perform slice remapping, and the first condition is determined by the target base station according to first slice information, wherein the first slice information is obtained by the target base station from an access and mobility management function, AMF and/or a neighbouring base station, wherein
the first slice information comprises: whether a packet data unit, PDU, session and/or slice that requires switch has a requirement for HO service continuity; and
the first condition comprises: a PDU session and/or slice that requires switch has a requirement for HO service continuity.

2. The method of claim 1, wherein the first slice information further comprises at least one of:
a slice support capability of the target base station;
a slice supported by the source base station;
a slice corresponding to a PDU session currently established by the terminal device at the source base station;
a slice supported by the target base station;
a service corresponding to a slice corresponding to an original PDU session;
a group that a slice corresponding to an original PDU session belongs to;
an indication of whether a default slice corresponding to the target base station is supported;
whether a PDU session and/or slice that requires switch has an indication for HO service continuity; or
whether a PDU session and/or slice that requires switch but is not supported by the target is a highest priority service and/or slice.

3. The method of claim 2, wherein the first condition further comprises at least one of:
the target base station has a slice support capability, wherein the slice support capability comprises a remapping capability;
the target base station does not support a slice corresponding to a PDU session requested by the source base station, but supports a default slice;
a slice corresponding to a PDU session established at the source base station by the terminal device requesting HO and a slice supported by the target base station have the same slice/service type, SST, field, but have different slice differentiators, SD;
a slice corresponding to a PDU session established at the source base station by the terminal device requesting HO and a slice supported by the target base station are different, but correspond to a same service;
a slice corresponding to a PDU session established at the source base station by the terminal device requesting HO and a slice supported by the target base station are different, but services corresponding to the two slices belong to a same service group;
a slice corresponding to a PDU session established at the source base station by the terminal device requesting HO and a slice supported by the target base station are different, but belong to a same slice group;
a PDU session and/or slice that requires switch has an indication for HO service continuity; or
a PDU session and/or slice that requires switch but is not supported by the target is a highest priority service and/or slice.

4. The method of any of claims 1 to 3, further comprising:
performing (170) slice remapping.

5. The method of claim 4, wherein performing slice remapping comprises:
modifying a mapping between original PDU sessions and data radio bearers, DRB, into a mapping between new PDU sessions and DRBs.

6. The method of claim 5, wherein modifying the mapping between original PDU sessions and DRBs into the mapping between new PDU sessions and DRBs comprises at least one of:
transmitting, by the target base station, an HO request acknowledge, ACK, to the source base station, wherein the ACK contains new-PDU-session information and/or notifies a data forwarding tunnel for a DRB corresponding to a PDU session to-be-remapped, and the new-PDU-session information comprises at least one of: a remapping indication, an original-PDU-session identity, ID, a slice corresponding to an original PDU session, a slice corresponding to a new PDU session, a new-PDU-session ID, the mapping between original PDU sessions and DRBs, or the mapping between new PDU sessions and DRBs;
data corresponding to the original PDU sessions is forwarded to the target base station by the source base station via the data forwarding tunnel, and an HO command is transmitted to the terminal device requesting HO by the source base station;
transmitting, by the target base station, a path switch request to an access and mobility management function, AMF;
a slice-management-function update-session-management-context request is transmitted by the AMF to a session management function, SMF, wherein the slice-management-function update-session-management-context request contains at least one of a list of PDU sessions to-be-remapped, a PDU session remapping indication, or a remapping cause;
a PDU session modification and/or establishment procedure is triggered by the SMF, to modify an existing PDU session and/or add a new PDU session;
a session modification request is transmitted by the SMF to a user plane function, UPF;
a session modification response is transmitted by the UPF to the SMF;
an end marker is transmitted by the UPF to the source base station;
a slice-management-function update-session-management-context response is transmitted by the SMF to the AMF, to indicate that the list of PDU sessions is remapped successfully;
receiving, by the target base station, a path switch request ACK transmitted by the AMF, wherein the path switch request ACK contains a list of remapped PDU sessions; or
transmitting, by the target base station, a release resource to the source base station after switch succeeds.

7. The method of any of claims 1 to 6, wherein whether to transmit the HO request to the target base station is determined by the source base station.

8. The method of claim 7, wherein whether to transmit the HO request to the target base station is determined by the source base station according to second slice information.

9. The method of claim 8, wherein
the HO request is transmitted to the target base station by the source base station when a second condition is satisfied, wherein the second condition is used for the source base station to determine whether to transmit the HO request to the target base station, and the second condition is determined by the source base station according to the second slice information.

10. The method of claim 8 or 9, wherein the second slice information comprises at least one of:
a slice support capability of the target base station;
a slice supported by the source base station;
a slice corresponding to a PDU session currently established by the terminal device at the source base station;
a slice supported by the target base station;
a service corresponding to a slice corresponding to an original PDU session;
a group that a slice corresponding to an original PDU session belongs to; or
an indication of whether a default slice corresponding to the target base station is supported.

11. The method of claim 10, wherein the second condition comprises at least one of:
the target base station has a slice support capability;
existence of an indication that a default slice corresponding to the target base station is supported;
a slice supported by the source base station is the same as a slice supported by the target base station, or is a subset of slices supported by the target base station;
a slice corresponding to a PDU session currently established by the terminal device at the source base station is the same as a slice supported by the target base station, or is a subset of slices supported by the target base station, or belongs to a same service group as a service corresponding to the slice supported by the target base station;
a service corresponding to a slice supported by the source base station is the same as a service corresponding to a slice supported by the target base station, or is a subset of services corresponding to slices supported by the target base station, or belongs to a same service group as the service corresponding to the slice supported by the target base station;
a service corresponding to a slice corresponding to a PDU session currently established by the terminal device at the source base station is the same as a service corresponding to a slice supported by the target base station, or is a subset of services corresponding to slices supported by the target base station;
a slice supported by the source base station and a slice supported by the target base station belong to a same group; or
a slice corresponding to a PDU session currently established by the terminal device at the source base station and a slice supported by the target base station belong to a same group.

12. The method of any of claims 7 to 11, wherein the HO request contains remapping information, and the remapping information comprises at least one of: a remapping indication, an original-PDU-session ID, a slice corresponding to an original PDU session, a slice corresponding to a new PDU session, a new-PDU-session ID, a mapping between original PDU sessions and DRBs, or a mapping between new PDU sessions and DRBs.

13. A target base station for network slice handover, HO, comprising:
a receiving module (230) configured to receive an HO request transmitted by a source base station; and
a determining module (250) configured to determine to perform slice remapping when a first condition is satisfied, wherein the first condition is used to determine whether to perform slice remapping, and the first condition is determined according to first slice information, wherein the first slice information is obtained by the target base station from an access and mobility management function, AMF and/or a neighbouring base station, wherein
the first slice information comprises: whether a packet data unit, PDU, session and/or slice that requires switch has a requirement for HO service continuity;
the first condition comprises: a PDU session and/or slice that requires switch has a requirement for HO service continuity.

14. The target base station of claim 13, wherein the first slice information further comprises at least one of:
a slice support capability of the target base station;
a slice supported by the source base station;
a slice corresponding to a PDU session currently established by the terminal device at the source base station;
a slice supported by the target base station;
a service corresponding to a slice corresponding to an original PDU session;
a group that a slice corresponding to an original PDU session belongs to;
an indication of whether a default slice corresponding to the target base station is supported;
whether a PDU session and/or slice that requires switch has an indication for HO service continuity; or
whether a PDU session and/or slice that requires switch but is not supported by the target is a highest priority service and/or slice.

15. The target base station of claim 14, wherein the first condition further comprises at least one of:
the target base station has a slice support capability, wherein the slice support capability comprises a remapping capability;
the target base station does not support a slice corresponding to a PDU session requested by the source base station, but supports a default slice;
a slice corresponding to a PDU session established at the source base station by the terminal device requesting HO and a slice supported by the target base station have the same slice/service type, SST, field, but have different slice differentiators, SD;
a slice corresponding to a PDU session established at the source base station by the terminal device requesting HO and a slice supported by the target base station are different, but correspond to a same service;
a slice corresponding to a PDU session established at the source base station by the terminal device requesting HO and a slice supported by the target base station are different, but services corresponding to the two slices belong to a same service group;
a slice corresponding to a PDU session established at the source base station by the terminal device requesting HO and a slice supported by the target base station are different, but belong to a same slice group;
a PDU session and/or slice that requires switch has an indication for HO service continuity; or
a PDU session and/or slice that requires switch but is not supported by the target is a highest priority service and/or slice.

## Patentansprüche

1. Verfahren zur Übergabe (HO) von Netzwerk-Slices, das von einer Ziel-Basisstation ausgeführt wird und Folgendes umfasst:
Empfangen (130), durch die Ziel-Basisstation, einer HO-Anforderung, die von einer Quell-Basisstation gesendet wurde; und
Bestimmen (150), durch die Ziel-Basisstation, ein Slice-Remapping durchzuführen, wenn eine erste Bedingung erfüllt ist,
wobei die erste Bedingung für die Ziel-Basisstation verwendet wird, um zu bestimmen, ob ein Slice-Remapping durchgeführt werden soll, und die erste Bedingung von der Ziel-Basisstation gemäß der ersten Slice-Information bestimmt wird,
wobei die erste Slice-Information von der Ziel-Basisstation von einer Zugangs- und Mobilitätsverwaltungsfunktion (AMF) und/oder einer benachbarten Basisstation erhalten wird,
wobei die erste Slice-Information Folgendes umfasst:
ob eine Paketdateneinheits-(PDU)-Sitzung und/oder ein Slice, die/das eine Umschaltung erfordert, eine Anforderung für die Kontinuität des HO-Dienstes hat; und wobei die erste Bedingung Folgendes umfasst:
eine PDU-Sitzung und/oder ein Slice, für die/das eine Umschaltung erforderlich ist, muss die Kontinuität des HO-Dienstes gewährleisten.

2. Verfahren nach Anspruch 1,
wobei die erste Slice-Information ferner mindestens eines der folgenden Elemente umfasst:
eine Slice-Unterstützungsfähigkeit der Ziel-Basisstation;
ein von der Quell-Basisstation unterstütztes Slice;
ein Slice, das einer PDU-Sitzung entspricht, die derzeit von dem Endgerät an der Quell-Basisstation aufgebaut wird;
ein von der Ziel-Basisstation unterstütztes Slice;
einen Dienst, der einem Slice entspricht, das einer ursprünglichen PDU-Sitzung entspricht;
eine Gruppe, zu der ein Slice gehört, das einer ursprünglichen PDU-Sitzung entspricht;
eine Angabe darüber, ob ein der Ziel-Basisstation entsprechendes Standard-Slice unterstützt wird;
ob eine PDU-Sitzung und/oder ein Slice, für die/das ein Switch erforderlich ist, einen Hinweis auf die Kontinuität des HO-Dienstes hat; oder
ob eine PDU-Sitzung und/oder ein Slice, die/das einen Switch erfordert, aber vom Ziel nicht unterstützt wird, ein Dienst und/oder Slice höchster Priorität ist.

3. Verfahren nach Anspruch 2,
wobei die erste Bedingung ferner mindestens eines der folgenden Elemente umfasst:
die Ziel-Basisstation besitzt eine Slice-Unterstützungsfähigkeit, wobei die Slice-Unterstützungsfähigkeit eine Remapping-Fähigkeit umfasst;
die Ziel-Basisstation unterstützt kein Slice, das einer von der Quell-Basisstation angeforderten PDU-Sitzung entspricht, sondern ein Standard-Slice;
ein Slice, das einer PDU-Sitzung entspricht, die an der Quell-Basisstation durch das Endgerät, das ein HO anfordert, eingerichtet wurde, und ein Slice, das von der Ziel-Basisstation unterstützt wird, das gleiche Slice/Service-Typ-Feld (SST) haben, aber unterschiedliche Slice-Differenzierer (SD) aufweisen;
wobei ein Slice, das einer PDU-Sitzung entspricht, die von dem Endgerät, das ein HO anfordert, an der Quell-Basisstation eingerichtet wurde, und ein Slice, das von der Ziel-Basisstation unterstützt wird, unterschiedlich sind, aber demselben Dienst entsprechen;
ein Slice, das einer PDU-Sitzung entspricht, die an der Quell-Basisstation durch das Endgerät, das ein HO anfordert, eingerichtet wurde, und ein Slice, das von der Ziel-Basisstation unterstützt wird, unterschiedlich sind, aber die Dienste, die den beiden Slices entsprechen, zu einer gleichen Dienstgruppe gehören;
ein Slice, das einer PDU-Sitzung entspricht, die an der Quell-Basisstation von dem Endgerät, das ein HO anfordert, eingerichtet wurde, und ein Slice, das von der Ziel-Basisstation unterstützt wird, unterschiedlich sind, aber zur gleichen Slice-Gruppe gehören;
eine PDU-Sitzung und/oder ein Slice, für die/das eine Umschaltung erforderlich ist, hat eine Anzeige für die Kontinuität des HO-Dienstes; oder
eine PDU-Sitzung und/oder ein Slice, die/das eine Umschaltung erfordert, aber vom Ziel nicht unterstützt wird, ist ein Dienst und/oder Slice mit höchster Priorität.

4. Verfahren nach einem der Ansprüche 1 bis 3, das ferner Folgendes umfasst:
Durchführen von (170) Slice-Remapping.

5. Verfahren nach Anspruch 4,
wobei die Durchführung des Slice-Remappings Folgendes umfasst:
Ändern eines Mappings zwischen ursprünglichen PDU-Sitzungen und Datenfunkträgern (DRB) in ein Mapping zwischen neuen PDU-Sitzungen und DRBs.

6. Verfahren nach Anspruch 5,
wobei das Ändern des Mappings zwischen ursprünglichen PDU-Sitzungen und DRBs in das Mapping zwischen neuen PDU-Sitzungen und DRBs mindestens eines der folgenden Elemente umfasst:
Übertragen, durch die Ziel-Basisstation, einer HO-Anforderungsbestätigung (ACK) an die Quell-Basisstation, wobei die ACK Informationen über eine neue PDU-Sitzung enthält und/oder einen Datenweiterleitungstunnel für einen DRB anzeigt, der einer neu zuzuordnenden PDU-Sitzung entspricht, und die Informationen über die neue PDU-Sitzung mindestens eines der folgenden Elemente umfassen:
eine Remapping-Angabe, eine Original-PDU-Sitzungsidentität (ID), ein Slice, das einer ursprünglichen PDU-Sitzung entspricht, ein Slice, das einer neuen PDU-Sitzung entspricht, eine neue PDU-Sitzungs-ID, die Zuordnung zwischen ursprünglichen PDU-Sitzungen und DRBs oder die Zuordnung zwischen neuen PDU-Sitzungen und DRBs;
wobei Daten, die den ursprünglichen PDU-Sitzungen entsprechen, von der Quell-Basisstation über den Datenweiterleitungstunnel an die Ziel-Basisstation weitergeleitet werden, und ein HO-Befehl an das Endgerät, das ein HO von der Quell-Basisstation anfordert, übertragen wird;
Übertragen, durch die Ziel-Basisstation, einer Pfadwechselanfrage an eine Zugangs- und Mobilitätsverwaltungsfunktion (AMF);
wobei eine Anfrage zur Aktualisierung des Sitzungsverwaltungskontextes der Slice-Verwaltungsfunktion (slice-management-function update-session-management-context) von der AMF an eine Sitzungsverwaltungsfunktion (SMF) übermittelt wird,
wobei die Anforderung zur Aktualisierung des Sitzungsverwaltungskontextes durch die Slice-Verwaltungsfunktion mindestens eine Liste der neu zuzuordnenden PDU-Sitzungen, eine Anzeige für das Remapping von PDU-Sitzungen oder eine Ursache für das Remapping enthält;
ein Verfahren zur Änderung und/oder Einrichtung einer PDU-Sitzung vom SMF ausgelöst wird, um eine bestehende PDU-Sitzung zu ändern und/oder eine neue PDU-Sitzung hinzuzufügen;
eine Anforderung zur Sitzungsänderung von der SMF an eine Benutzerebenenfunktion (UPF) übermittelt wird;
eine Antwort auf die Sitzungsänderung von der UPF an die SMF übermittelt wird;
eine Endmarkierung von der UPF an die Quell-Basisstation übertragen wird;
eine Antwort zur Aktualisierung des Sitzungsverwaltungskontextes der Slice-Verwaltungsfunktion wird von der SMF an die AMF übertragen, um anzuzeigen, dass die Liste der PDU-Sitzungen erfolgreich neu zugeordnet wurde;
Empfangen, durch die Ziel-Basisstation, einer von der AMF gesendeten Pfadwechselanforderungsbestätigung (ACK),
wobei die ACK der Pfadwechselanforderung eine Liste der neu zugeordneten PDU-Sitzungen enthält; oder
Übertragen, durch die Ziel-Basisstation einer Freigabe-Ressource an die Quell-Basisstation nach erfolgreicher Umschaltung.

7. Verfahren nach einem der Ansprüche 1 bis 6,
wobei die Quell-Basisstation bestimmt, ob die HO-Anforderung an die Ziel-Basisstation übertragen werden soll.

8. Verfahren nach Anspruch 7,
wobei die Quell-Basisstation anhand der zweiten Slice-Information bestimmt, ob die HO-Anforderung an die Ziel-Basisstation übertragen werden soll.

9. Verfahren nach Anspruch 8,
wobei die HO-Anforderung von der Quell-Basisstation an die Ziel-Basisstation übertragen wird, wenn eine zweite Bedingung erfüllt ist,
wobei die zweite Bedingung für die Quell-Basisstation verwendet wird, um zu bestimmen, ob die HO-Anforderung an die Ziel-Basisstation übertragen werden soll, und die zweite Bedingung von der Quell-Basisstation gemäß der zweiten Slice-Information bestimmt wird.

10. Verfahren nach Anspruch 8 oder 9,
wobei die zweite Slice-Information mindestens eines der folgenden Elemente umfasst:
eine Slice-Unterstützungsfähigkeit der Ziel-Basisstation;
ein von der Quell-Basisstation unterstütztes Slice;
ein Slice, das einer PDU-Sitzung entspricht, die derzeit von dem Endgerät an der Quell-Basisstation aufgebaut wird;
ein von der Ziel-Basisstation unterstütztes Slice;
einen Dienst, der einem Slice entspricht, das einer ursprünglichen PDU-Sitzung entspricht;
eine Gruppe, zu der ein Slice gehört, das einer ursprünglichen PDU-Sitzung entspricht; oder
eine Angabe darüber, ob ein der Ziel-Basisstation entsprechendes Standard-Slice unterstützt wird.

11. Verfahren nach Anspruch 10,
wobei die zweite Bedingung mindestens einen der folgenden Punkte umfasst:
die Ziel-Basisstation verfügt über eine Slice-Unterstützungsfähigkeit;
Vorhandensein eines Hinweises, dass ein der Ziel-Basisstation entsprechendes Standard-Slice unterstützt wird;
ein von der Quell-Basisstation unterstütztes Slice ist dasselbe wie ein von der Ziel-Basisstation unterstütztes Slice, oder ist eine Teilmenge der von der Ziel-Basisstation unterstützten Slices;
ein Slice, das einer PDU-Sitzung entspricht, die derzeit von dem Endgerät an der Quell-Basisstation aufgebaut wird, ist dasselbe wie ein Slice, das von der Ziel-Basisstation unterstützt wird, oder ist eine Teilmenge von Slices, die von der Ziel-Basisstation unterstützt werden, oder es gehört zu derselben Dienstgruppe wie ein Dienst, der dem Slice entspricht, das von der Ziel-Basisstation unterstützt wird;
ein Dienst, der einem von der Quell-Basisstation unterstützten Slice entspricht, ist derselbe wie ein Dienst, der einem von der Ziel-Basisstation unterstützten Slice entspricht, oder er ist eine Teilmenge von Diensten, die den von der Ziel-Basisstation unterstützten Slices entsprechen, oder er gehört zu derselben Dienstgruppe wie der Dienst, der dem von der Ziel-Basisstation unterstützten Slice entspricht;
ein Dienst, der einem Slice entspricht, das einer PDU-Sitzung entspricht, die derzeit von dem Endgerät an der Quell-Basisstation aufgebaut wird, ist derselbe wie ein Dienst, der einem Slice entspricht, das von der Ziel-Basisstation unterstützt wird, oder ist eine Teilmenge von Diensten, die Slices entsprechen, die von der Ziel-Basisstation unterstützt werden;
ein von der Quell-Basisstation unterstütztes Slice und ein von der Ziel-Basisstation unterstütztes Slice gehören zur selben Gruppe; oder
ein Slice, das einer PDU-Sitzung entspricht, die derzeit von dem Endgerät an der Quell-Basisstation aufgebaut wird, und ein Slice, das von der Ziel-Basisstation unterstützt wird, gehören zu derselben Gruppe.

12. Verfahren nach einem der Ansprüche 7 bis 11,
wobei die HO-Anforderung Remapping-Informationen enthält, und die Remapping-Informationen mindestens eines der folgenden Elemente umfassen:
eine Remapping-Angabe, eine Original-PDU-Sitzungs-ID, ein Slice, das einer ursprünglichen PDU-Sitzung entspricht, ein Slice, das einer neuen PDU-Sitzung entspricht, eine neue PDU-Sitzungs-ID, ein Mapping zwischen ursprünglichen PDU-Sitzungen und DRBs oder ein Mapping zwischen neuen PDU-Sitzungen und DRBs.

13. Ziel-Basisstation für die Übergabe (HO) von Netzwerk-Slices, die Folgendes umfasst:
ein Empfangsmodul (230), das so ausgebildet ist, dass es eine von einer Quell-Basisstation übertragene HO-Anforderung empfängt; und
ein Bestimmungsmodul (250), das so ausgebildet ist, dass es bestimmt, dass ein Slice-Remapping durchgeführt wird, wenn eine erste Bedingung erfüllt ist,
wobei die erste Bedingung verwendet wird, um zu bestimmen, ob ein Slice-Remapping durchgeführt werden soll, und die erste Bedingung entsprechend der ersten Slice-Information bestimmt wird,
wobei die erste Slice-Information von der Ziel-Basisstation von einer Zugangs- und
Mobilitätsverwaltungsfunktion (AMF) und/oder einer benachbarten Basisstation erhalten wird,
wobei die erste Slice-Information Folgendes umfasst:
ob eine Paketdateneinheits-(PDU)-Sitzung und/oder ein Slice, die/das eine Vermittlung erfordert, eine Anforderung an die Kontinuität des HO-Dienstes hat;
wobei die erste Bedingung Folgendes umfasst:
eine PDU-Sitzung und/oder ein Slice, für die/das eine Umschaltung erforderlich ist, muss die Kontinuität des HO-Dienstes gewährleisten.

14. Ziel-Basisstation nach Anspruch 13,
wobei die erste Slice-Information ferner mindestens eines der folgenden Elemente umfasst:
eine Slice-Unterstützungsfähigkeit der Ziel-Basisstation;
ein von der Quell-Basisstation unterstütztes Slice;
ein Slice, das einer PDU-Sitzung entspricht, die derzeit von dem Endgerät an der Quell-Basisstation aufgebaut wird;
ein von der Ziel-Basisstation unterstütztes Slice;
einen Dienst, der einem Slice entspricht, das einer ursprünglichen PDU-Sitzung entspricht;
eine Gruppe, zu der ein Slice gehört, das einer ursprünglichen PDU-Sitzung entspricht;
eine Angabe darüber, ob ein der Ziel-Basisstation entsprechendes Standard-Slice unterstützt wird;
ob eine PDU-Sitzung und/oder ein Slice, für die/das ein Switch erforderlich ist, einen Hinweis auf die Kontinuität des HO-Dienstes hat; oder
ob eine PDU-Sitzung und/oder ein Slice, die/das einen Switch erfordert, aber vom Ziel nicht unterstützt wird, ein Dienst und/oder Slice höchster Priorität ist.

15. Ziel-Basisstation nach Anspruch 14, wobei die erste Bedingung außerdem mindestens eines der folgenden Merkmale umfasst:
die Ziel-Basisstation besitzt eine Slice-Unterstützungsfähigkeit, wobei die Slice-Unterstützungsfähigkeit eine Remapping-Fähigkeit umfasst;
die Ziel-Basisstation unterstützt kein Slice, das einer von der Quell-Basisstation angeforderten PDU-Sitzung entspricht, sondern ein Standard-Slice;
ein Slice, das einer PDU-Sitzung entspricht, die an der Quell-Basisstation durch das Endgerät, das ein HO anfordert, eingerichtet wurde, und ein Slice, das von der Ziel-Basisstation unterstützt wird, das gleiche Slice/Service-Typ-Feld (SST) haben, aber unterschiedliche Slice-Differenzierer (SD) aufweisen;
wobei ein Slice, das einer PDU-Sitzung entspricht, die von dem Endgerät, das HO anfordert, an der Quell-Basisstation eingerichtet wurde, und ein Slice, das von der Ziel-Basisstation unterstützt wird, unterschiedlich sind, aber demselben Dienst entsprechen;
ein Slice, das einer PDU-Sitzung entspricht, die an der Quell-Basisstation durch das Endgerät, das HO anfordert, eingerichtet wurde, und ein Slice, das von der Ziel-Basisstation unterstützt wird, unterschiedlich sind, aber die Dienste, die den beiden Slices entsprechen, zu einer gleichen Dienstgruppe gehören;
ein Slice, das einer PDU-Sitzung entspricht, die an der Quell-Basisstation von dem Endgerät, das HO anfordert, eingerichtet wurde, und ein Slice, das von der Ziel-Basisstation unterstützt wird, unterschiedlich sind, aber zur gleichen Slice-Gruppe gehören;
eine PDU-Sitzung und/oder ein Slice, für die/das ein Switch erforderlich ist, hat eine Anzeige für die Kontinuität des HO-Dienstes; oder
eine PDU-Sitzung und/oder ein Slice, die/das einen Switch erfordert, aber vom Ziel nicht unterstützt wird, ist ein Dienst und/oder Slice mit höchster Priorität.

## Revendications

1. Procédé de transfert, HO, de tranche de réseau exécuté par une station de base cible et comprenant :
la réception (130), par la station de base cible, d'une demande de HO transmise par une station de base source ; et
la détermination (150), par la station de base cible, d'exécuter un remappage de tranche lorsqu'une première condition est satisfaite, dans lequel la première condition est utilisée par la station de base cible pour déterminer s'il faut ou non exécuter le remappage de tranche, et la première condition est déterminée par la station de base cible en fonction de premières informations de tranche, dans lequel les premières informations de tranche sont obtenues par la station de base cible à partir d'une fonction de gestion d'accès et de mobilité, AMF, et/ou d'une station de base voisine, dans lequel
les premières informations de tranche comprennent :
l'information consistant en ce qu'une session et/ou une tranche d'unité de données en paquets, PDU, qui nécessite une commutation a ou non une exigence de continuité de service HO ; et
la première condition comprend : une session et/ou une tranche d'unité de données en paquets, PDU, qui nécessite une commutation a une exigence de continuité de service HO.

2. Procédé selon la revendication 1, dans lequel les premières informations de tranche comprennent en outre au moins l'un des éléments suivants :
une capacité de prise en charge de tranche de la station de base cible ;
une tranche prise en charge par la station de base source ;
une tranche correspondant à une session PDU actuellement établie par le dispositif terminal sur la station de base source ;
une tranche prise en charge par la station de base cible ;
un service correspondant à une tranche correspondant à une session PDU originale ;
un groupe auquel appartient une tranche correspondant à une session PDU originale ;
une indication de la prise en charge ou non d'une tranche par défaut correspondant à la station de base cible ;
l'information consistant en ce qu'une session et/ou une tranche PDU qui nécessite une commutation a ou non une exigence de continuité de service HO ; ou
l'information consistant en ce qu'une session et/ou une tranche PDU qui nécessite une commutation mais n'est pas prise en charge par la cible est un service et/ou une tranche de la plus haute priorité.

3. Procédé selon la revendication 2, dans lequel la première condition comprend en outre au moins l'un des éléments suivants :
la station de base cible a une capacité de prise en charge de tranche, dans lequel la capacité de prise en charge de tranche comprend une capacité de remappage ;
la station de base cible ne prend pas en charge une tranche correspondant à une session PDU demandée par la station de base source, mais prend en charge une tranche par défaut ;
une tranche correspondant à une session PDU établie sur la station de base source par le dispositif terminal demandant le HO et une tranche prise en charge par la station de base cible ont le même champ de type de tranche/service, SST, mais ont des différenciateurs de tranche, SD, différents ;
une tranche correspondant à une session PDU établie sur la station de base source par le dispositif terminal demandant le HO et une tranche prise en charge par la station de base cible sont différentes, mais correspondent à un même service ;
une tranche correspondant à une session PDU établie sur la station de base source par le dispositif terminal demandant le HO et une tranche prise en charge par la station de base cible sont différentes, mais des services correspondant aux deux tranches appartiennent au même groupe de services ;
une tranche correspondant à une session PDU établie sur la station de base source par le dispositif terminal demandant le HO et une tranche prise en charge par la station de base cible sont différentes, mais appartiennent à un même groupe de tranches ;
une session et/ou une tranche PDU qui nécessite une commutation a une indication de continuité de service HO ; ou
une session et/ou une tranche PDU qui nécessite une commutation mais n'est pas prise en charge par la cible est un service et/ou une tranche de la plus haute priorité.

4. Procédé selon l'une quelconque des revendications 1 à 3, comprenant en outre :
l'exécution (170) du remappage de tranche.

5. Procédé selon la revendication 4, dans lequel l'exécution du remappage de tranche comprend :
la modification d'un mappage entre des sessions PDU et des porteuses radio de données, DRB, originales en un mappage entre de nouvelles sessions PDU et DRB.

6. Procédé selon la revendication 5, dans lequel la modification du mappage entre des sessions PDU et des DRB originales en mappage entre de nouvelles sessions PDU et DRB comprend au moins l'une des opérations suivantes :
la transmission, par la station de base cible, d'un accusé de réception, ACK, de demande de HO, à la station de base source, dans lequel l'ACK contient des informations de nouvelle session PDU et/ou notifie un tunnel de transfert de données pour une DRB correspondant à une session PDU à remapper, et les informations de nouvelle session PDU comprennent au moins l'un des éléments suivants : une indication de remappage, une identité, ID, de session PDU originale, une tranche correspondant à une session PDU originale, une tranche correspondant à une nouvelle session PDU, une ID de nouvelle session PDU, le mappage entre les sessions PDU et les DRB originales, ou le mappage entre les nouvelles sessions PDU et DRB ;
des données correspondant aux sessions PDU originales sont transférées à la station de base cible par la station de base source par le biais du tunnel de transfert de données, et une instruction de HO est transmise au dispositif terminal demandant le HO par la station de base source ;
la transmission, par la station de base cible, d'une demande de commutation de trajet à une fonction de gestion d'accès et de mobilité, AMF ;
une demande de contexte de gestion de session de mise à jour de fonction de gestion de tranche est transmise par l'AMF à une fonction de gestion de session, SMF, dans lequel la demande de contexte de gestion de session de mise à jour de fonction de gestion de tranche contient au moins l'une d'une liste de sessions PDU à remapper, d'une indication de remappage de session PDU, ou d'une cause de remappage ;
une procédure de modification et/ou d'établissement de session PDU est déclenchée par la SMF, pour modifier une session PDU existante et/ou ajouter une nouvelle session PDU ;
une demande de modification de session est transmise par la SMF à une fonction de plan utilisateur, UPF ;
une réponse de modification de session est transmise par l'UPF à la SMF ;
un marqueur terminal est transmis par l'UPF à la station de base source ;
une réponse de contexte de gestion de session de mise à jour de fonction de gestion de tranche est transmise par la SMF à l'AMF, pour indiquer que la liste de sessions PDU est remappée avec succès ;
la réception, par la station de base cible, d'un ACK de demande de commutation de trajet transmis par l'AMF, dans lequel l'ACK de demande de commutation de trajet contient une liste de sessions PDU remappées ; ou
la transmission, par la station de base cible, d'une ressource de libération à la station de base source après la réussite de la commutation.

7. Procédé selon l'une quelconque des revendications 1 à 6, dans lequel la transmission ou non de la demande de HO à la station de base cible est déterminée par la station de base source.

8. Procédé selon la revendication 7, dans lequel la transmission ou non de la demande de HO à la station de base cible est déterminée par la station de base source en fonction de secondes informations de tranche.

9. Procédé selon la revendication 8, dans lequel la demande de HO est transmise à la station de base cible par la station de base source lorsqu'une seconde condition est satisfaite, dans lequel la seconde condition est utilisée par la station de base source pour déterminer s'il faut transmettre la demande de HO à la station de base cible, et la seconde condition est déterminée par la station de base source en fonction des secondes informations de tranche.

10. Procédé selon la revendication 8 ou 9, dans lequel les secondes informations de tranche comprennent au moins l'un des éléments suivants :
une capacité de prise en charge de tranche de la station de base cible ;
une tranche prise en charge par la station de base source ;
une tranche correspondant à une session PDU actuellement établie par le dispositif terminal sur la station de base source ;
une tranche prise en charge par la station de base cible ;
un service correspondant à une tranche correspondant à une session PDU originale ;
un groupe auquel appartient une tranche correspondant à une session PDU originale ; ou
une indication de la prise en charge ou non d'une tranche par défaut correspondant à la station de base cible.

11. Procédé selon la revendication 10, dans lequel la seconde condition comprend au moins l'un des éléments suivants :
la station de base cible a une capacité de prise en charge de tranche ;
l'existence d'une indication indiquant qu'une tranche par défaut correspondant à la station de base cible est prise en charge ;
une tranche prise en charge par la station de base source est la même qu'une tranche prise en charge par la station de base cible, ou est un sous-ensemble de tranches prises en charge par la station de base cible ;
une tranche correspondant à une session PDU actuellement établie par le dispositif terminal sur la station de base source est la même qu'une tranche prise en charge par la station de base cible, ou est un sous-ensemble de tranches prises en charge par la station de base cible, ou appartient à un même groupe de services qu'un service correspondant à la tranche prise en charge par la station de base cible ;
un service correspondant à une tranche prise en charge par la station de base source est le même qu'un service correspondant à une tranche prise en charge par la station de base cible, ou est un sous-ensemble de services correspondant à des tranches prises en charge par la station de base cible, ou appartient à un même groupe de services qu'un service correspondant à la tranche prise en charge par la station de base cible ;
un service correspondant à une tranche correspondant à une session PDU actuellement établie par le dispositif terminal sur la station de base source est le même qu'un service correspondant à une tranche prise en charge par la station de base cible, ou est un sous-ensemble de services correspondant à des tranches prises en charge par la station de base cible ;
une tranche prise en charge par la station de base source et une tranche prise en charge par la station de base cible appartiennent à un même groupe ; ou
une tranche correspondant à une session PDU actuellement établie par le dispositif terminal sur la station de base source et une tranche prise en charge par la station de base cible appartiennent à un même groupe.

12. Procédé selon l'une quelconque des revendications 7 à 11, dans lequel la demande de HO contient des informations de remappage, et les informations de remappage comprennent au moins l'un des éléments suivants : une indication de remappage, une identité, ID, de session PDU originale, une tranche correspondant à une session PDU originale, une tranche correspondant à une nouvelle session PDU, une ID de nouvelle session PDU, le mappage entre les sessions PDU et les DRB originales, ou le mappage entre les nouvelles sessions PDU et DRB.

13. Station de base cible pour un transfert, HO, de tranche de réseau, comprenant :
un module de réception (230) configuré pour recevoir une demande de HO transmise par une station de base source ; et
un module de détermination (250) configuré pour déterminer l'exécution d'un remappage de tranche lorsqu'une première condition est satisfaite, dans laquelle la première condition est utilisée pour déterminer s'il faut ou non exécuter le remappage de tranche, et la première condition est déterminée en fonction de premières informations de tranche, dans laquelle les premières informations de tranche sont obtenues par la station de base cible à partir d'une fonction de gestion d'accès et de mobilité, AMF, et/ou d'une station de base voisine, dans laquelle
les premières informations de tranche comprennent :
l'information consistant en ce qu'une session et/ou une tranche d'unité de données en paquets, PDU, qui nécessite une commutation a ou non une exigence de continuité de service HO ; et
la première condition comprend : une session et/ou une tranche d'unité de données en paquets, PDU, qui nécessite une commutation a une exigence de continuité de service HO.

14. Station de base cible selon la revendication 13, dans laquelle les premières informations de tranche comprennent au moins l'un des éléments suivants :
une capacité de prise en charge de tranche de la station de base cible ;
une tranche prise en charge par la station de base source ;
une tranche correspondant à une session PDU actuellement établie par le dispositif terminal sur la station de base source ;
une tranche prise en charge par la station de base cible ;
un service correspondant à une tranche correspondant à une session PDU originale ;
un groupe auquel appartient une tranche correspondant à une session PDU originale ;
une indication de la prise en charge ou non d'une tranche par défaut correspondant à la station de base cible ;
l'information consistant en ce qu'une session et/ou une tranche PDU qui nécessite une commutation a ou non une exigence de continuité de service HO ; ou
l'information consistant en ce qu'une session et/ou une tranche PDU qui nécessite une commutation mais n'est pas prise en charge par la cible est un service et/ou une tranche de la plus haute priorité.

15. Station de base cible selon la revendication 14, dans laquelle la première condition comprend en outre au moins l'un des éléments suivants :
la station de base cible a une capacité de prise en charge de tranche, dans laquelle la capacité de prise en charge de tranche comprend une capacité de remappage ;
la station de base cible ne prend pas en charge une tranche correspondant à une session PDU demandée par la station de base source, mais prend en charge une tranche par défaut ;
une tranche correspondant à une session PDU établie sur la station de base source par le dispositif terminal demandant le HO et une tranche prise en charge par la station de base cible ont le même champ de type de tranche/service, SST, mais ont des différenciateurs de tranche, SD, différents ;
une tranche correspondant à une session PDU établie sur la station de base source par le dispositif terminal demandant le HO et une tranche prise en charge par la station de base cible sont différentes, mais correspondent à un même service ;
une tranche correspondant à une session PDU établie sur la station de base source par le dispositif terminal demandant le HO et une tranche prise en charge par la station de base cible sont différentes, mais des services correspondant aux deux tranches appartiennent au même groupe de services ;
une tranche correspondant à une session PDU établie sur la station de base source par le dispositif terminal demandant le HO et une tranche prise en charge par la station de base cible sont différentes, mais appartiennent à un même groupe de tranches ;
une session et/ou une tranche PDU qui nécessite une commutation a une indication de continuité de service HO ; ou
une session et/ou une tranche PDU qui nécessite une commutation mais n'est pas prise en charge par la cible est un service et/ou une tranche de la plus haute priorité.
